# EUROPEAN PATENT APPLICATION

(11) **EP 3 324 603 A1**
(43) Date of publication of application: **23.05.2018**
(21) Application number: 16306521.2
(22) Date of filing: 21.11.2016
(51) Int. Cl.: H04L 29/12

(54) **METHOD, SYSTEM AND COMPUTER-READABLE MEDIUM TO CONNECT A REMOTE RADIO HEAD AND A REMOTE RADIO HEADS MANAGER**

(71) Applicant: Nokia Technologies Oy, 02610 Espoo (FI)
(72) Inventor: MONGAZON-CAZAVET, Bruno, 91620 NOZAY (FR); TABURET, François, 91620 NOZAY (FR)
(74) Representative: Renoult, Adrien

(57) **Abstract**

Method, system and computer-readable medium to connect a remote radio head and a remote radio heads manager. This method comprises a first step of receiving, by the remote radio head, a first IP address associated to the remote radio head and a second step of receiving, by the remote radio head, a second IP address associated to the remote radio heads manager and a step of connecting the remote radio head to the remote radio heads manager.

## Description

### FIELD OF INVENTION

The present subject matter relates to a method to connect a remote radio head to a remote radio heads manager. This connection will be useful to configure the remote radio head. The present subject matter also relates to a system comprising a remote radio head. The remote radio heads manager could for example be a computer resource supporting the remote radio head configuration manager.

### BACKGROUND

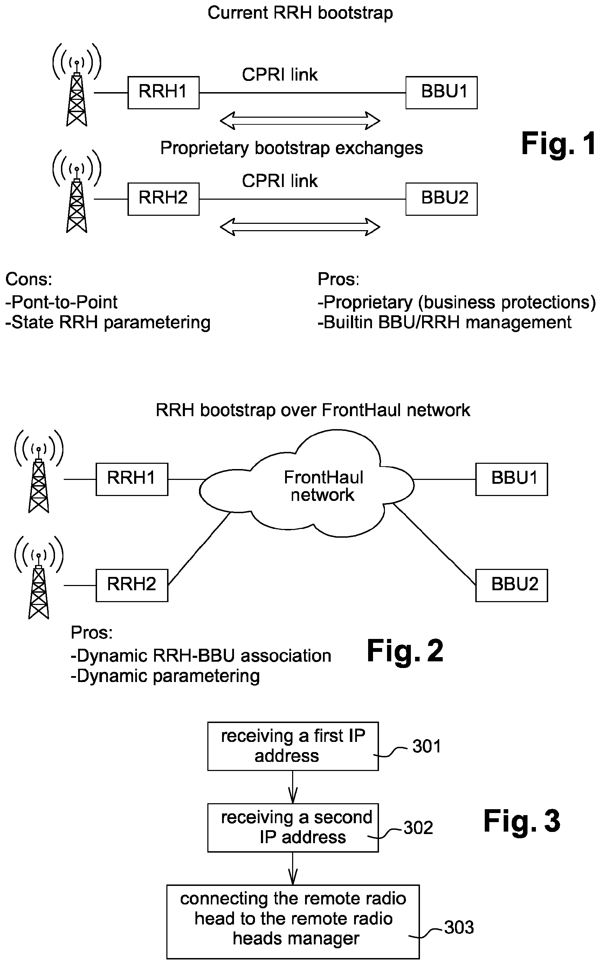

Cellular Radio Access Network (RAN) is evolving from a point to point topology between Remote Radio Heads (RRH) and Base Band Units (BBU), as depicted in (Figure 1) to a more flexible network architecture (the fronthaul network, is abbreviated as FH) where a set of BBUs can serve a set of RRHs (Figure 2). In the point to point architecture, BBUs to RRHs links are set up at deployment time, a given BBU is statically configured to work with its connected RRH, when the RRH boots it gets its Configuration and Internet Protocol (IP) address from the BBU which then starts a Configuration and Management session with the RRH and send it it's configuration data (frequency, bandwidth, transmission gain....). In a fronthaul network, there is no predefined association between a given BBU and a RHH. Furthermore, some advanced functionalities require a BBU to be logically connected to several RRHs (for example Cooperative Multi Point (COMP)). Sending the RRH configuration from the BBU is no more the most efficient mechanism.

In first fronthaul implementation and deployments, it is likely that the traditional RRH management process will survive. The BBU to RRH associations will be a configuration parameter, giving a first level of flexibility to the operator. This doesn't take advantage of all the capabilities of the fronthaul topology, which ultimately allows fully reconfigurable RRH/BBU associations.

### SUMMARY

This summary is provided to introduce concepts related to methods dedicated to the connection of a remote radio head to a remote radio heads manager.

In one implementation a method to connect a remote radio head to a remote radio heads manager is described. This method comprises a first step of receiving, by the remote radio head, a first IP address associated to the remote radio head and a second step of receiving, by the remote radio head, a second IP address associated to the remote radio heads manager and a step of connecting the remote radio head to the remote radio heads manager.

In another implementation a remote radio head is described. This remote radio head comprises a first module configured to receive a first IP address associated to this remote radio head and a second module configured to receive a second IP address associated a remote radio heads manager and a connection module configured to connect the remote radio head to the remote radio heads manager.

In another implementation a computer-readable medium is described. This computer-readable medium has embodied a computer program configured to realize a method to connect a remote radio head to a remote radio heads manager. This method comprises the following steps a first step 301 of receiving, by the remote radio head, a first IP address associated to the remote radio head and a second step 302 of receiving, by the remote radio head, a second IP address associated to the remote radio heads manager and a step of connecting 303 the remote radio head to the remote radio heads manager.

### BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 presents a point to point topology between Remote Radio Head (RRH) and Base Band Units (BBU)
Figure 2 presents a flexible network architecture where a set of BBUs can serve a set of RRHs
Figure 3 presents a general embodiment of the present subject matter
Figure 4-a and 4-b present a first specific embodiment of the present subject matter
Figure 5-a and 5-b presents a second specific embodiment of the present subject matter
Figure 6 present a RRH object of the present subject matter

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The object of the present subject matter defines a new fronthaul functional entity: The Remote Radio Heads manager (RRHs manager). This entity will be discovered by RRHs at boot time, using standards internet protocols functionalities. The localization of this new fronthaul function will depend on operators' requirements. For example, it can be implemented in existing hardware equipment such as a DHCP server or a Software Defined Network (SDN) controller. The RRH manager is responsible for delivering the configuration of the RRH, it can take this configuration from another network entity or it can be the central repository of these data. In an advanced implementation the RRH manager can compute the configuration data from the RRH capabilities, and from the monitoring of the radio environment retrieved from other network entities (eNodeB's).

The figure 3 presents, a general embodiment of a method, to connect a remote radio head and a remote radio heads manager, object of the present subject matter. This method comprises:
- a first step 301 of receiving, by the remote radio head, a first IP address associated to the remote radio head and
- a second step 302 of receiving, by the remote radio head, a second IP address associated to the remote radio heads manager and
- a step of connecting 303 the remote radio head to the remote radio heads manager.

The step of connection of the remote radio head to the remote radio heads manager is made by using the first and second IP addresses.

In an embodiment the first IP address and the second IP address are received by the remote radio head within one single message.

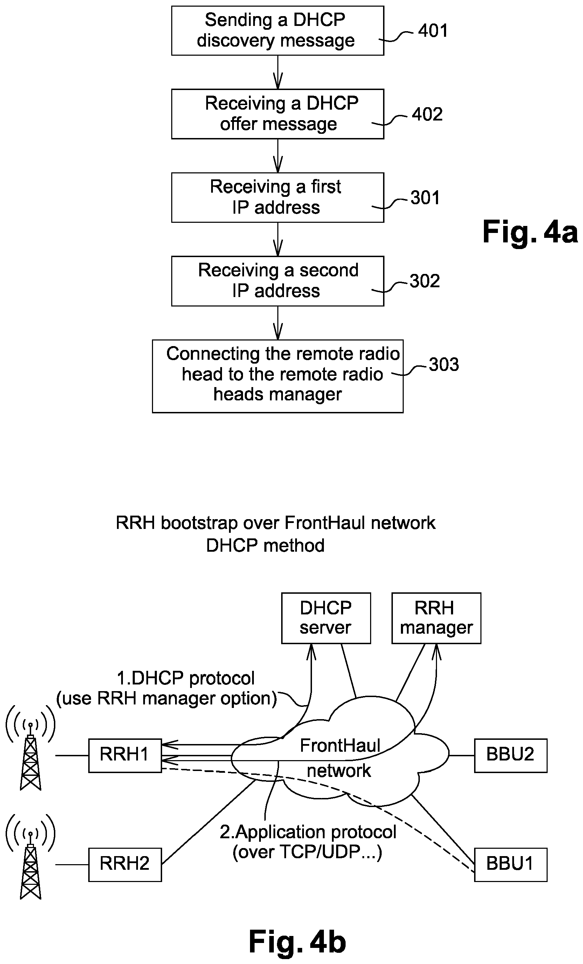

In a first specific embodiment, presented figure 4, the method to connect a remote radio head and a remote radio heads manager comprises, before the first step of reception:
- a step 401 of sending, by the remote radio head, a DHCP discovery message, this message including a Vendor-specific information containing a vendor-specific option identifying the remote radio heads manager and
- a step 402 of receiving, by the remote radio head, a DHCP offer message, this DHCP offer message containing the first IP address and the second IP address.

In an embodiment the vendor-specific option identifies the Nokia RRH manager option with an IPv4/IPv6 address syntax.

Within the embodiments, previously described, the method proposes to use DHCP protocol to obtain both the IP address of the RRH and the IP address of the RRH manager.

In other words, the first specific embodiment, described within the previous section, uses Vendor-specific information for DHCPv4. These embodiments assume that the fronthaul (FH) network is a layer-2 network with broadcast capabilities. An Ethernet network is typically used for the embodiments. These embodiments will be presented in this section with reference to IPv4 addressing, it can be either used for IPv6 addressing. In the latter case, option code, length and value are chosen to match IPv6 addressing. The method comprises:
- A first step during which the RRH system builds a DHCP discover including a Vendor-specific information (DHCP option 43) which contains a vendor-specific option identifying for example: 'Nokia RRH Manager IPv4 address' for a length of 4 bytes with zero initial value. The RRH system also includes its link-layer address in the 'chaddr' of DHCP discover as specified in RFC 2131.
   The RRH system then broadcasts the DHCP discover on the fronthaul (FH) link.
   The purpose of this first step is twofold, obtaining an IPv4 address for the FH IPv4 connectivity (client IPv4 address) as well as obtaining the IPv4 address of the Nokia RRH manager it shall contact to obtain its RRH configuration data.
- If a DHCP server is reachable on the FH network, a second step is realized. Within this second step the DHCP server processes the DHCP discover for both client IPv4 address allocation (regular RFC 2131 processing) and 'Nokia RRH Manager IPv4 address' allocation (if the Vendor-specific information as defined in the first step is recognized). The allocation of IPv4 address and Nokia RRH manager IPv4 address are not detailed and implementation-dependent. The 'Nokia RRH Manager IPv4 address' value is returned by the DHCP server in the Vendor-specific option value of the DHCP offer. If no DHCP server is reachable, the RRH system keeps sending periodically DHCP discover commands as specified in Step a, until it is instructed to stop (i.e. power off). If this second step succeeds, the DHCP offer is sent towards the RRH system by the DHCP server.
- In the third step, the RRH system receives the DHCP offer from DHCP server and obtains its client IPv4 address as well as 'Nokia RRH manager IPv4 address' (if the Vendor-specific information as defined in the first step is recognized). The RRH system then sends a DHCP request and waits for DHCP acknowledge as specified by RFC 2131. At this stage the RRH system has IPv4 connectivity to the FH network and the 'Nokia RRH manager'. It is then available to perform RRH bootstrap in coordination with Nokia RRH manager using application protocol over IP (TCP, UDP...).

The figure 4-b is an illustration of this section.

The content of application-specific information exchanges between the RRH system and the Nokia RRH manager is outside the scope of the present divulgation. At the end of application-specific information exchanges, the RRH system can start sending/receiving information with one/several BBU(s).

Within other embodiments the first IP address and the second IP address are received by the remote radio head within two different messages.

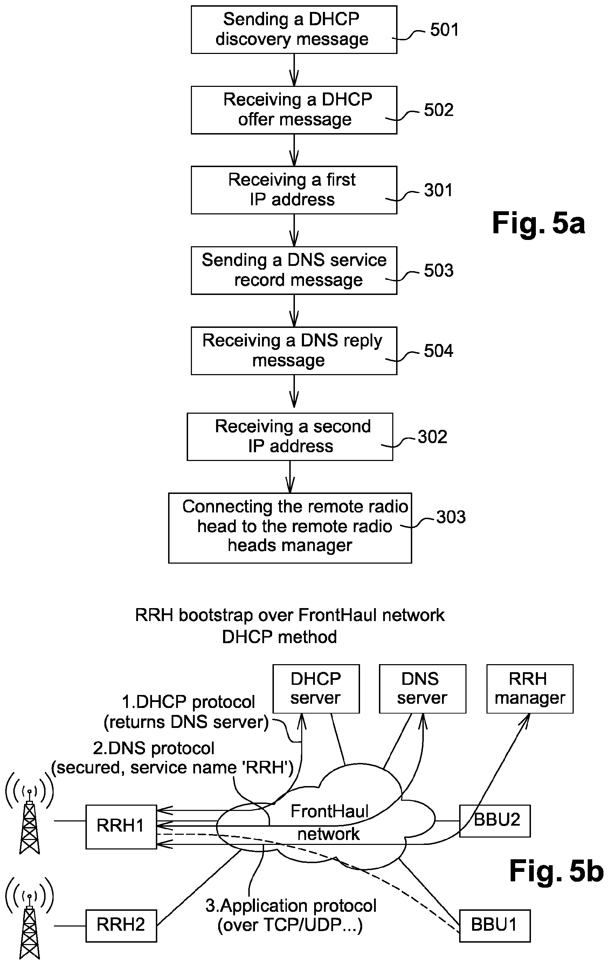

The figure 5 presents an example of a second specific embodiment in which the IP addresses are received within two different messages. This method comprising, before the first step of reception,
- a step 501 of sending, by the remote radio head, a DHCP discovery message, and
- a step 502 of receiving, by the remote radio head, a DHCP offer message, this DHCP offer message containing the first IP address and an IP address of a DNS server;
the method also comprising between the first step of reception and the second of reception:
- a step of sending 503, by the remote radio head and to the DNS server, a DNS service record message with a predetermined service symbolic name and
- a step of receiving 504, by the remote radio head, a DNS reply message containing the second IP address.

In other words, within this second specific embodiment of the previous sections, the RRH will be connected to an RRH manager whose IP address is obtained through DNS protocol. The method of this embodiment uses DNS service record discovery (DNS SRV) mechanism as defined in RFC 2782. As for the previously described embodiment, this embodiment assumes that the fronthaul (FH) network is a layer-2 network with broadcast capabilities. An Ethernet network is typically used for the embodiment. Furthermore, as for the previous embodiment, IPv4 and IPv6 addresses might be used. The method comprises:
- A first step in which the RRH system perform a regular DHCP cycle to obtain its client IPv4 address as well as a primary (and possibly secondary) DNS IPv4 address(es). Once the DHCP cycle is completed, the RRH system performs a DNS SRV RR towards the primary DNS server specifying Service symbolic name for example 'Nokia RRH manager'. The DNS server is configured to return the IPv4 address of a RRH manager (implementation-dependent) in the DNS reply. The RRH system receives the DNS reply and extract the IPv4 Nokia RRH manager address.
- A second step in which the RRH system uses its client IPv4 and the Nokia RRH manager IPv4 address (both returned from the first step) to execute an application-specific RRH configuration protocol. This step is similar to the end of the third step of the previous embodiment).

The figure 5-b is an illustration of this section.

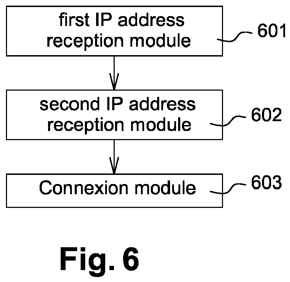

An embodiment of the present subject matter is a RRH. This embodiment is presented figure 6. This RRH comprises different modules to allow the connection of this RRH to an RRH manager. The RRH will comprises the regular modules of a state of the art RRH and at least the following modules:
- a first module 601 configured to receive a first IP address associated to this RRH and
- a second module 602 configured to receive a second IP address associated to the remote radio heads manager and
- a connection module 603 configured to connect the remote radio head to the remote radio heads manager.

The different module will be realized by one or more processors and one or more memory. The module may also be realized by the use of dedicated hardware as well as hardware capable of executing software in association with appropriate software. When provided by a processor, the modules may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes modules and data. The modules include routines, programs, objects, components, data structures, etc., which perform particular tasks or implement particular abstract data types. The data, amongst other things, serves as a repository for storing data processed, received, and generated by one or more of the modules.

In an embodiment the remote radio head comprises modules to realize the method presented in figure 4-a, 4-b, 5-a and 5-b.

A person skilled in the art will readily recognize that steps of the methods, presented above, can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media.

An embodiment of the subject matter computer-readable medium having embodied thereon a computer program configured to realize the method, presented figure 3, to connect a remote radio head and a remote radio heads manager. The method comprises the following steps:
- a first step 301 of receiving, by the remote radio head, a first IP address associated to the remote radio head and
- a second step 302 of receiving, by the remote radio head, a second IP address associated to the remote radio heads manager and
- a step of connecting 303 the remote radio head to the remote radio heads manager.

## Claims

1. Method to connect a remote radio head and a remote radio heads manager comprising;
• a first step (301) of receiving, by the remote radio head, a first IP address associated to the remote radio head and
• a second step (302) of receiving, by the remote radio head, a second IP address associated to the remote radio heads manager and
• a step (303) of connecting the remote radio head to the remote radio heads manager.

2. Method according to the claim 1 wherein the first IP address and the second IP address are received by the remote radio head within one single message.

3. Method according to the claim 2 comprising, before the first step of reception,
• a step (401) of sending, by the remote radio head, a DHCP discovery message, this message including a Vendor-specific information containing a vendor-specific option identifying the remote radio heads manager, and
• a step (402) of receiving, by the remote radio head, a DHCP offer message, this DHCP offer message containing the first IP address and the second IP address

4. Method according to the claim 1 wherein the first IP address and the second IP address are received by the remote radio head within two different messages.

5. Method according to the claim 4 comprising, before the first step of reception,
• a step (501) of sending, by the remote radio head, a DHCP discovery message, and
• a step (502) of receiving, by the remote radio head, a DHCP offer message, this DHCP offer message containing the first IP address and an IP address of a DNS server;
the method also comprising between the first step of reception and the second of reception:
• a step (503) of sending, by the remote radio head and to the DNS server, a DNS service record message with a predetermined service symbolic name and
• a step (504) of receiving, by the remote radio head, a DNS reply message containing the second IP address.

6. Remote radio head comprising different modules to allow the connection of this Remote radio head to a Remote radio heads manager, the modules of this remote radio head being at least:
• a first module (601) configured to receive a first IP address associated to this Remote radio head and
• a second module (602) configured to receive a second IP address associated to the remote radio heads manager and
• a module (603) configured to connect the remote radio head to the remote radio heads manager.

7. Computer-readable medium having embodied thereon a computer program configured to realize a method to connect a remote radio head and a remote radio heads manager, the method comprising the following steps:
• a first step (301) of receiving, by the remote radio head, a first IP address associated to the remote radio head and
• a second step (302) of receiving, by the remote radio head, a second IP address associated to the remote radio heads manager and
• a step of connecting (303) the remote radio head to the remote radio heads manager.

8. Computer-readable medium according to the claim 7 wherein the first IP address and the second IP address are received by the remote radio head within one single message.

9. Computer-readable medium according to the claim 8 comprising, before the first step of reception,
• a step (401) of sending, by the remote radio head, a DHCP discovery message, this message including a Vendor-specific information containing a vendor-specific option identifying the remote radio heads manager, and
• a step (402) of receiving, by the remote radio head, a DHCP offer message, this DHCP offer message containing the first IP address and the second IP address

10. Computer-readable medium according to the claim 7 wherein the first IP address and the second IP address are received by the remote radio head within two different messages.

11. Computer-readable medium according to the claim 10 comprising, before the first step of reception,
• a step (501) of sending, by the remote radio head, a DHCP discovery message, and
• a step (502) of receiving, by the remote radio head, a DHCP offer message, this DHCP offer message containing the first IP address and an IP address of a DNS server;
the method also comprising between the first step of reception and the second of reception:
• a step (503) of sending, by the remote radio head and to the DNS server, a DNS service record message with a predetermined service symbolic name and
• a step (504) of receiving, by the remote radio head, a DNS reply message containing the second IP address.
